(19) Europäisches Patentamt
European Patent Office
Office européen des brevets

(11) **EP 2 006 267 A1**

(12) **EUROPEAN PATENT APPLICATION**
published in accordance with Art. 153(4) EPC

(43) Date of publication:
**24.12.2008 Bulletin 2008/52**

(51) Int Cl.:
***C04B 37/00*** *(2006.01)*

(21) Application number: **07739852.7**

(22) Date of filing: **27.03.2007**

(86) International application number:
**PCT/JP2007/056414**

(87) International publication number:
**WO 2007/116742 (18.10.2007 Gazette 2007/42)**

(84) Designated Contracting States:
**DE FR GB**

(30) Priority: **29.03.2006 JP 2006092289**

(71) Applicants:
• **Tokuyama Corporation**
 **Shunan-shi, Yamaguchi-ken 745-8648 (JP)**
• **National Institute of Advanced Industrial Science and Technology**
 **Tokyo 100-8921 (JP)**

(72) Inventors:
• **KANECHIKA, Yukihiro**
 **Shunan-shi**
 **Yamaguchi 745-8648 (JP)**

• **AZUMA, Masanobu**
 **Shunan-shi**
 **Yamaguchi 745-8648 (JP)**
• **YASUOKA, Masaki**
 **Nagoya-shi**
 **Aichi 463-8560 (JP)**
• **WATARI, Koji**
 **Nagoya-shi**
 **Aichi 463-8560 (JP)**

(74) Representative: **Kador & Partner**
 **Corneliusstrasse 15**
 **80469 München (DE)**

(54) **METHOD OF JOINING CERAMICS AND CERAMIC JUNCTION ELEMENT**

(57)     [Problem] It is an object to provide a joining method, whereby even ceramics having an extremely small dielectric loss factor such as aluminum nitride can be joined efficiently and tightly.

[Means for Resolution] A method of joining ceramics of the present invention is a method of heating ceramics of the same kind or different kinds by inducing self-heating of the ceramics by electromagnetic wave irradiation and thereby joining the ceramics together, and includes preheating a surface to be joined of the ceramic by a heating means that includes an auxiliary heating means other than the self-heating.

[Fig.5]

**Description**

TECHNICAL FIELD

The present invention relates to methods of joining ceramics and ceramic joined articles. More specifically, the present invention relates to methods of joining ceramics and ceramic joined articles using an electromagnetic wave such as a microwave.

BACKGROUND ART

As a method of joining ceramics, a joining method by locally heating around a part to be joined is known conventionally.

The heating method may be laser irradiation, microwave irradiation or the like.

However, ceramics are heated and fused from the outside thereof by laser irradiation. Consequently, an internal strength of a joined article is low and a shape of a joined surface is easily changed. In addition, the method has problems that only ceramics of oxides can be joined, that a heat crack is easily generated unfortunately, and that a residual of an air bubble in a joined part and a coarse of a crystal grain occur in some cases unfortunately.

As a method of joining ceramics by microwave irradiation, JP-2-62516-B (Patent document 1) describes a method of joining ceramics using a ceramic joining apparatus comprising a resonance cavity, a microwave generating means, a pressurization means for pressurizing surfaces to be joined of the ceramics put in the microwave resonance cavity, and a temperature control means for controlling a temperature distribution in the ceramics. JP-2-62516-B describes that since only each surface to be joined of the ceramics is heated uniformly and rapidly by using the method, the ceramics can be joined efficiently and tightly.

Patent document 1: JP-2-62516-B

DISCLOSURE OF THE INVENTION

PROBLEMS TO BE SOLVED BY THE INVENTION

The joining method described in Patent document 1 is effective for a joining of a material such as alumina, silicon carbide, and silicon nitride. However, ceramic having an extremely small dielectric loss factor such as aluminum nitride cannot be joined by the method.

The present invention has been made in consideration of such conditions, and an object of the present invention is to provide a joining method that enables to join efficiently and tightly even ceramics having an extremely small dielectric loss factor such as aluminum nitride together.

MEANS FOR SOLVING THE PROBLEMS

A method of joining ceramics of the present invention is a method of thermally joining ceramics of the same kind or different kinds by inducing self-heating of the ceramics by electromagnetic wave irradiation, and comprises preheating a surface to be joined of the ceramic by a heating means that comprises an auxiliary heating means other than the self-heating.

The preheating is preferably carried out up to a temperature in which the rate of temperature increase of the ceramic due to the self-heating is 1°C per minute or higher in the vicinity of the surface to be joined of the ceramic.

The preheating is preferably carried out up to a temperature in which the dielectric loss factor ($\varepsilon_r \tan\delta$) of the ceramic is 0.005 or higher under the condition that the measuring frequency is 2.45 GHz in the vicinity of the surface to be joined of the ceramic.

It is preferable that the auxiliary heating means is a heating element placed around the surface to be joined of the ceramic.

It is preferable that the heating element is a dielectric body made of a substance having a dielectric loss factor at room temperature (25°C) larger than that of the ceramic and self-heating of the dielectric body is induced by absorption of the electromagnetic wave. It is preferable that the dielectric body is made of a substance having a dielectric loss factor ($\varepsilon_r \tan\delta$) of 0.003 or higher at room temperature (25°C) and a dielectric loss factor ($\varepsilon_r \tan\delta$) of 0.5 or higher at 800°C, under the condition that the measuring frequency is 2.45 GHz.

The heating element may be a resistance heating element. The auxiliary heating means may be a heating furnace.

The frequency of the electromagnetic wave is preferably in the range of 0.2 to 30 GHz.

The method of joining ceramics of the present invention enables to join ceramics having the following properties, together:

the dielectric loss factor ($\varepsilon_r \tan\delta$) is each in the range of 0.0001 to 0.002 at room temperature (25°C) and in the range of 0.003 to 0.3 at 800°C, under the condition that the measuring frequency is 2.45 GHz and the difference in thermal expansion coefficient between the ceramics is within $3 \times 10^{-6}$ [$K^{-1}$].

The method of joining ceramics of the present invention enables to join aluminum nitride bodies together.

A method of joining aluminum nitride bodies of the present invention comprises:

inducing self-heating of a burned substance that is placed around the surface to be joined of the aluminum nitride body and that is made of a compound of at least one of silicon carbide, zirconia, and steatite by electromagnetic wave irradiation thereto and, by this heat, heating a surface to be joined of the aluminum nitride body up to 1000°C or higher;

making the surfaces to be joined come into contact with each other while keeping the temperature; and thereafter heating (inducing self-heating of) the surfaces to be joined by electromagnetic wave irradiation, thereby joining the aluminum nitride bodies together.

A ceramic joined article of the present invention is formed by joining by the method as defined above.

EFFECT OF THE INVENTION

According to the method of joining ceramics of the present invention, the surface to be joined of the ceramic is preheated in advance. Consequently, even when ceramic having an extremely small dielectric loss factor such as aluminum nitride is used, self-heating of the surface to be joined and an area in the vicinity thereof of the ceramic is induced by electromagnetic wave irradiation, and thereby the ceramics are efficiently and tightly joined together.

BRIEF DESCRIPTION OF THE DRAWINGS

Fig. 1 is a view showing examples of shapes of surface to be joined of ceramics.
Fig. 2 is a view showing examples of embodiments of joining ceramics.
Fig. 3 is a view showing an embodiment of a means for pressurizing surfaces to be joined of ceramics.
Fig. 4 is a schematic view showing an arrangement and a shape of a test piece in a three point flexural test.
Fig. 5 is a schematic view (side view) showing an example of arrangements in preheating of an AlN sinter 1 and a heating element for preheating (SiC sinter) 2.
Fig. 6 is a schematic view (plan view) showing an example of arrangements in preheating of an AlN sinter 1 and a heating element for preheating (SiC sinter) 2.

EXPLANATIONS OF LETTERS OR NUMERALS

1: ceramic (aluminum nitride sinter)
2: Heating element for preheating (silicon carbide sinter)
3: Jig for a ceramic
4: Jig for a heating element
5: Microwave transmitter
6: Joining apparatus
11: Surfaces to be joined

BEST MODE OF CARRYING OUT THE INVENTION

The method of joining ceramics and the ceramic joined article of the present invention will be described below in detail.

[Method of joining ceramics]

The method of joining ceramics of the present invention is a method of heating ceramics of the same kind or different kinds by inducing self-heating of the ceramics by electromagnetic wave irradiation and thereby joining the ceramics together, and comprises preheating a surface to be joined of the ceramic by a heating means that comprises an auxiliary heating means other than the self-heating.

<Ceramic>

The ceramic to be joined by the method of joining ceramics of the present invention may be alumina, silicon carbide, silicon nitride, aluminum nitride (AlN), aluminum oxynitride, silicon oxynitride, zirconia or the like.
According to the method of joining ceramics of the present invention, even ceramics having an extremely small dielectric loss factor can be joined.
The ceramic having an extremely small dielectric loss factor is a ceramic having a dielectric loss factor ($\varepsilon_r\tan\delta$) in the range of 0.0001 to 0.002 at room temperature (25°C) and a dielectric loss factor ($\varepsilon_r\tan\delta$) in the range of 0.003 to 0.3 at 800°C, under the condition that the measuring frequency is 2.45 GHz, in particular, a ceramic having a dielectric loss factor ($\varepsilon_r\tan\delta$) in the range of 0.0005 to 0.002 at room temperature (25°C) and a dielectric loss factor ($\varepsilon_r\tan\delta$) in the range of 0.003 to 0.1 at 800°C, under the condition that the measuring frequency is 2.45 GHz. The dielectric loss factor ($\varepsilon_r\tan\delta$) can be obtained by multiplying the relative dielectric constant ($\varepsilon_r$) of the ceramic by a dielectric loss tangent ($\tan\delta$) measured by an LCD meter.
Specific examples of the ceramic having an extremely small dielectric loss factor include aluminum nitride (AlN), silicon nitride, and single crystal alumina. Table 1 shows values of the dielectric loss factor of aluminum nitride (AlN).
Table 1

| Dielectric loss factor of aluminum nitride (AlN) (measuring frequency = 2.45 GHz) | |
|---|---|
| Temperature (°C) | Dielectric loss factor |
| 25 | 0.001 |
| 800 | 0.004 |
| 1200 | 0.008 |
| 1400 | 0.01 |
| 1700 | 0.4 |

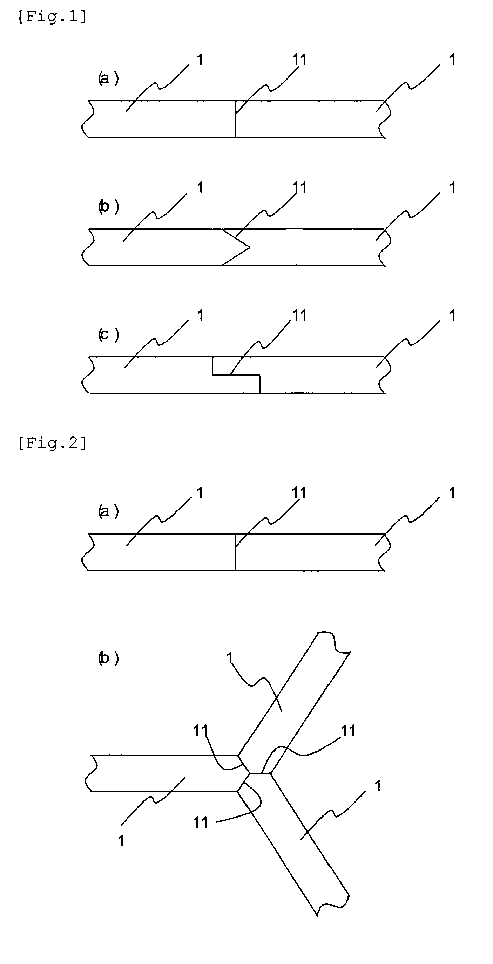

The ceramics to be joined by the method of joining ceramics of the present invention may be ceramics of the same kind or ceramics of different kinds. In the case where ceramics of the different kinds are joined, it is preferable to join ceramics having the following properties, together: the dielectric loss factor ($\varepsilon_r\tan\delta$) is each in the range of 0.0001 to 0.002 at room temperature (25°C) and in the range of 0.003 to 0.3 at 800°C, under the condition that the measuring frequency is 2.45 GHz, and the difference in thermal expansion coefficient between the ceramics is within $5 \times 10^{-6}$ [K$^{-1}$], preferably within $3 \times 10^{-6}$ [K$^{-1}$]. When ceramics having a small difference in thermal expansion coefficient are joined together, a problem such as a shake and a crack that occurs during heating or cooling based on a large difference in thermal expansion coefficient does not occur. Examples of a combination of the ceramics of the different kinds include aluminum nitride (AlN) and silicon nitride, aluminum nitride (AlN) and single crystal alumina, and silicon nitride and single crystal alumina.
From a view point of obtaining a more tight ceramic joined article, it is preferable that ceramics of the same kind such as AlN and AlN are joined together.
A shape of the ceramic to be joined is not restricted in particular. For instance, the shape of the ceramic to be joined may be a prism, a circular cylinder, or a block. To obtain a ceramic joined article having more reliable joining strength, it is preferable that the surfaces to be joined of the ceramics are made flat by an abrasive finishing or the like and a gap is prevented from being generated when ceramics are abutted to each other.
The shape of the surface to be joined of the ceramic may be a plan shape as shown in Fig. 1(a), a V-shape as shown in Fig. 1(b), and a step-shape as shown in Fig. 1(c).
A number of the ceramics to be joined is not restricted in particular. For instance, two ceramics may be joined as shown in Fig. 2 (a), three ceramics may be joined as shown in Fig. 2(b), and more ceramics may be joined.

<Preheating>

The method of joining ceramics of the present invention is a method of heating ceramics of the same kind or different kinds by inducing self-heating of the ceramics by electromagnetic wave irradiation and thereby joining the ceramics, and comprises preheating a surface to be joined of the ceramic by a heating means that comprises an auxiliary heating means other than the self-heating.

An energy P absorbed in a sample material by a dielectric heating using an electromagnetic wave such as a microwave is represented by the expression:

$$P = 2\pi f \varepsilon_0 \varepsilon_r \tan\delta E^2$$

wherein $\varepsilon_0$ is a dielectric constant of vacuum, $\varepsilon_r$ is a relative dielectric constant, $\tan\delta$ is a dielectric loss tangent, f is a frequency, and E is an electric field strength of the electromagnetic wave such as a microwave.

When the dielectric loss factor $\varepsilon''$ (= $\varepsilon_r \tan\delta$) is larger, the energy absorption efficiency of the sample material is higher.

The dielectric loss factor $\varepsilon''$ (= $\varepsilon_r \tan\delta$) changes according to a temperature, a frequency or the like. The dielectric loss factor $\varepsilon''$ (= $\varepsilon_r \tan\delta$) of ceramics is small at around room temperature in general, but rises rapidly as a temperature rises.

The dielectric loss factor $\varepsilon''$ (= $\varepsilon_r \tan\delta$) of ceramic such as aluminum nitride at around room temperature is extremely small as compared with other ceramic. Consequently, it is extremely difficult to heat the ceramic by normal microwave irradiation from room temperature to a temperature enabling the joining.

In the method of joining ceramics of the present invention, the temperature of the surface to be joined of the ceramic to be joined is increased by preheating up to a temperature in which heating based on the self-heating by electromagnetic wave irradiation becomes easy, that is, up to a temperature in which the self-heating is easily induced by absorption of the electromagnetic wave. Consequently, even ceramic such as aluminum nitride is used, self-heating of the ceramic can be induced by electromagnetic wave irradiation, and the ceramic can be heated and joined based on the self-heating.

The temperature in which the self-heating of the ceramic to be joined is induced easily means a temperature in which a rate of temperature increase of the ceramic by the self-heating is 1°C per minute or higher for instance, preferably 3°C per minute or higher. The upper limit of the rate of temperature increase is 50°C per minute for instance, preferably 30°C per minute. The temperature depends on the kind of the ceramic and the frequency of the electromagnetic wave. For instance, if the frequency of the electromagnetic wave is 2.45 GHz, the self-heating of ceramic is easily induced at a temperature in which a dielectric loss factor ($\varepsilon_r \tan\delta$) is 0.005 or higher.

In the case where the ceramic is aluminum nitride, the self-heating of aluminum nitride is easily induced at a temperature of 1000°C or higher for instance, preferably at a temperature of 1200°C or higher.

When ceramics are joined together actually, it is preferable to know a relationship between the dielectric loss factor and the temperature of the ceramic to be joined in advance and thereafter to carry out the preheating with monitoring the temperature of the ceramic to be joined.

In the preheating step, the surface to be joined of the ceramic is heated by a heating means that comprises an auxiliary heating means other than the self-heating of the ceramics to be joined.

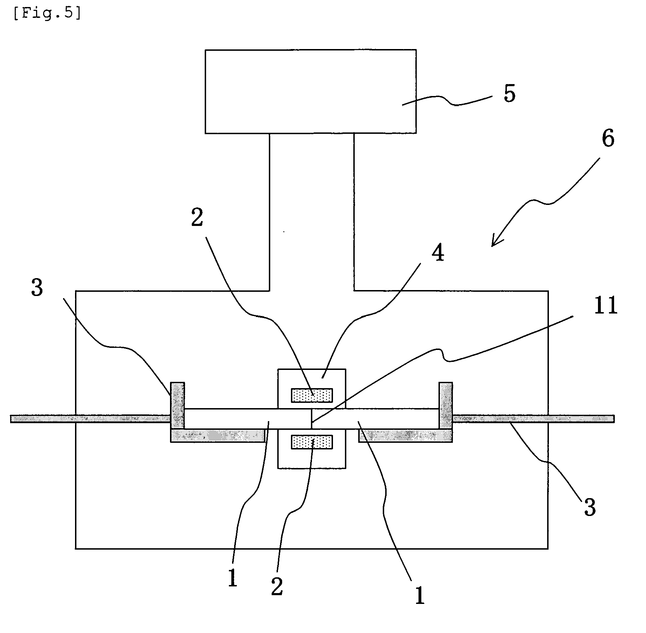

Preferable examples of the auxiliary heating means include a heating element placed around the surface to be joined of the ceramic. In a preheating step using the heating element as the auxiliary heating means, as shown in Fig. 5, a shaped body made of a substance having a dielectric loss factor at around room temperature larger than that of the ceramics is placed around surface to be joined of the ceramic, self-heating of the substance is induced by electromagnetic wave irradiation. The temperature of the ceramics at an area in the vicinity of the surface to be joined is increased by the heat.

The heating element is a shaped body of a substance having a dielectric loss factor larger than that of the ceramic to be joined. The substance having a large dielectric loss factor is, for instance, a substance in which the dielectric loss factor ($\varepsilon_r \tan\delta$) is in the range of 0.003 to 2 at room temperature (25°C) and is in the range of 0.5 to 5 at 800°C, under the condition that the measuring frequency is 2.45 GHz, preferably a substance in which the dielectric loss factor ($\varepsilon_r \tan\delta$) is in the range of 0.003 to 1 at room temperature (25°C) and is in the range of 0.5 to 2.5 at 800°C, under the condition that the measuring frequency is 2.45 GHz.

Examples of the substance having a large dielectric loss factor include silicon carbide (SiC), zirconia ($ZrO_2$), and steatite. Table 2 shows values of the dielectric loss factor of these substances.

Table 2

| Dielectric loss factor of silicon carbide and zirconia (frequency = 2.45 GHz) | | |
|---|---|---|
| Temperature (°C) | Dielectric loss factor | |
| | silicon carbide | Zirconia |
| 25 | 0.8 | 0.005 |
| 500 | 1.5 | 0.01 |
| 800 | | 0.5 |
| 1000 | 1.5 | 1 |
| 1400 | 1.7 | 2.2 |
| 1700 | 1.7 | 4 |

Since these substances have a large dielectric loss factor, the self-heating of these substances is easily induced by absorbing an electromagnetic wave.

The electromagnetic wave to be used is preferably an electromagnetic wave having a frequency in the range of 0.2 to 30 GHz (a microwave or a millimeter wave). For instance, and an electromagnetic wave of 2.45 GHz may be used.

To have the ceramic efficiently absorb an energy of the electromagnetic wave, it is preferable that electromagnetic wave irradiation is carried out while at least an area in the vicinity of the surface to be joined of the ceramic is housed in a container that does not leak the electromagnetic wave to the outside thereof. Moreover, a cavity resonator may also be used.

In particular, in the case where ceramics of the different kinds, which are different in the temperature in which the self-heating is induced, are joined together, the preheating is carried out up to a temperature in which the self-heating of one of these ceramics is induced easily and, by the self-heating, the other ceramic is heated.

It is preferable that the preheating is carried out while ceramics to be joined are arranged on the position where the main heating will be carried out after the preheating and are made come into contact with each other. In doing so, it is not necessary to change the arrangement of the ceramics for the main heating, and the step of joining ceramics is simplified.

Moreover, it is also possible that the preheating is carried out without bringing the ceramics to be joined into contact with each other and, immediately after the preheating, the ceramics to be joined are brought into contact with each other to carry out the main heating.

The heating element as the auxiliary heating means may be a resistance heating element. In this case, the heating element generates heat by not electromagnetic wave irradiation (the self-heating due to the electromagnetic wave absorption) but applying an electric current thereto.

Other examples of the auxiliary heating means include a heating furnace and the like. For instance, ceramics to be joined are heated up to at least a temperature in which the self-heating can be induced easily by a heating furnace such as an electric heating furnace, and the self-heating of the ceramics is induced by electromagnetic wave irradiation to the surfaces to be joined immediately after the heating, thereby enabling joining the ceramics together.

The preheating may be carried out by only the auxiliary heating means, and may also be carried out by using the auxiliary heating means together with inducing self-heating of the ceramic to be joined. For instance, in the case where the auxiliary heating means is a heating element that generates heat by an electromagnetic wave absorption as described above, and the ceramic to be joined is a substance having an extremely small dielectric loss factor such as aluminum nitride, self-heating of only the heating element is induced in practice at room temperature when the heating element and the ceramic to be joined are irradiated with an electromagnetic wave. Consequently, the preheating is carried out by only the auxiliary heating means.

On the other hand, in the case where the ceramic to be joined is a substance having a large dielectric loss factor such as silicon carbide, self-heating of both the heating element and the ceramic to be joined are induced by electromagnetic wave irradiation thereto. Consequently, the preheating is carried out by using the auxiliary heating means together with induced self-heating of the ceramic to be joined. Even when the ceramic to be joined is a substance having an extremely small dielectric loss factor such as aluminum nitride, both the heating element and the ceramic to be joined are heated by self-heating thereof induced by electromagnetic wave irradiation thereto at a high temperature.

<Main heating>

In the present invention, the surface to be joined and an area in the vicinity thereof of the ceramic heated by the auxiliary heating means up to a temperature in which the self-heating is induced easily are further heated (hereafter this further heating is referred to as "main heating") by electromagnetic wave irradiation to the surface to be joined (that is, by self-heating due to an electromagnetic wave absorption) while surfaces to be joined of the ceramics to be joined are made come into contact with each other, to join the ceramics together.

In the ceramic to be joined, a temperature of only the surface to be joined and an area in the vicinity thereof is locally increased by the preheating as described above, and thereby a value of a dielectric loss factor is increased. Consequently, in the main heating, only the surface to be joined and an area in the vicinity thereof can be efficiently heated by electromagnetic wave irradiation up to a temperature in which the joining can be carried out.

After the completion of the preheating, it is preferable that the main heating is carried out while a temperature of the surface to be joined of ceramic is maintained to the temperature in which the self-heating is induced easily.

When the heating element is used as the auxiliary heating means during the preheating, the heating element (the auxiliary heating means) may be removed in the main heating (may be moved to a position where the heating element makes little or no impact on the main heating). Moreover, the heating element can be used together as a heating means in the main heating. It is preferable to carry out the main heating after removing the heating element because a component of the heating element does not come to be mixed in the ceramic to be joined, and a heating efficiency to the ceramic to be joined is increased.

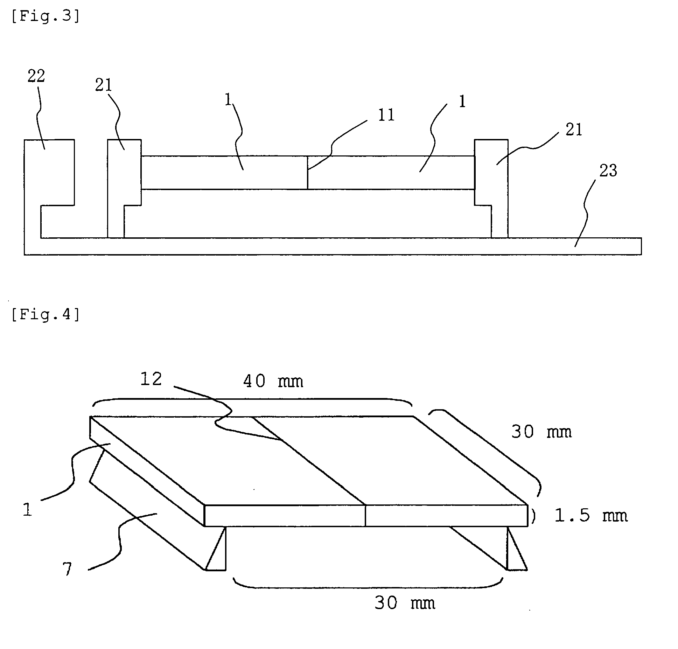

When the main heating is carried out, it is preferable that the surfaces to be joined of the ceramics are pressurized by pressing the ceramics to each other in order to join the ceramics more tightly. As a means for pressurizing the surfaces to be joined of the ceramics, a publicly known pressurizing means as shown in Fig. 3 (i.e., Fig. 17 of Patent document 1) comprising a symmetric concentric chucks 21 for holding an end opposite to the surface 11 to be joined of the ceramic 1 to be joined, an air cylinder 22 that can pressurize the chucks, and a table for moving 23 that can move the chucks while the chucks are pressurized may be used.

When the main heating is carried out, the surfaces to be joined of ceramics are made come into direct contact with each other as described above. In addition, ceramic powder or a paste containing the powder may be placed between the surfaces to be joined.

As the ceramic powder, powder of a ceramic having the same composition as that of the ceramic to be joined is used in normal. To heat the surface to be joined more efficiently, powder of ceramic having a dielectric loss factor larger than that of the ceramic to be joined may be used. An average particle diameter of the powder may be in the range of 0.1 to 15 $\mu$m for instance.

It is preferable that the ceramics powder such as aluminum nitride powder and a sintering aid is contained in the paste at a mass ratio as follows: the ceramics powder : the sintering aid = 100 : 0.5 to 10, preferably 100 : 2 to 7. When the ratio of the ceramic powder and the sintering aid is in the above range, a sintering temperature of the ceramic powder is sufficiently decreased, the sintering aid is sufficiently volatilized or is sufficiently diffused in a ceramic joined article, and thereby the sintering aid is prevented from remaining locally in the vicinity of the joining surface.

The sintering aid may be, for instance, an oxide, a nitride, a chloride, a nitrate, a carbonate, and a fluoride of a rare earth metal or an alkali earth metal, preferably $Y_2O_3$, CaO, and $Yb_2O_3$.

It is preferable that a particle diameter of the ceramic powder and the sintering aid is in the range of 0.1 to 3 $\mu$m. When the particle diameter, in particular the particle diameter of the ceramic is in the range of 0.1 to 3 $\mu$m, a ratio of a volume of the ceramic in a volume of the entire paste is large, and thereby a density after sintering is enlarged.

Carbon powder may be contained in the paste. Containing the carbon powder is preferable from the viewpoint that volatilizing of the sintering aid can be accelerated during heating described later.

It is preferable that the ceramic powder and the carbon powder are contained in the paste at a mass ratio as follows: ceramic powder : carbon powder = 100 : 0.5 to 30, preferably 100 : 1 to 10. When the ratio of the carbon powder is in the above range, volatilizing of the sintering aid can be preferably accelerated during sintering.

A particle size of the carbon powder is preferably in the range of 0.1 to 10 $\mu$m. In the case in which a particle size of the carbon powder is in the range of 0.1 to 10 $\mu$m, a distribution of carbon in the paste can be uniformed.

A solvent contained in the paste may be ethyl cellulose or terpineol. The content of the solvent in the paste may be in the range of 10 to 50 % by mass at room temperature (25°C).

As the electromagnetic wave, an electromagnetic wave having a frequency in the range of 0.2 to 30 GHz (a microwave or a millimeter wave) is preferably used, and an electromagnetic wave of 2.45 GHz may be used for instance.

To have ceramic efficiently absorb an energy of the electromagnetic wave, it is preferable that electromagnetic wave irradiation is carried out while at least an area in the vicinity of the surface to be joined of the ceramic is housed in a container that does not leak the electromagnetic wave to the outside thereof.

As described above, in the joining method of the present invention, it is required to heat by electromagnetic wave irradiation only at least the surface to be joined and an area in the vicinity thereof of the ceramics. Consequently, a large ceramic joined article can be formed using a compact electromagnetic wave irradiation apparatus (a microwave sintering furnace or the like).

For electromagnetic wave irradiation, a publicly known apparatus such as an apparatus disclosed in Patent document 1 may be used.

[Ceramic joined article]

The ceramic joined article of the present invention is formed by joining ceramics together by the method of joining ceramics of the present invention.

Therefore, the strength of the ceramic joined article of the present invention is satisfactory. For instance, the flexural strength in a three point flexural test at room temperature according to the flexural test method of fine ceramics at room temperature (JIS C2141) with a direct load applied to the joining part is 70% or higher and preferably 80% or higher of that of the base material, that is, the ceramic before joining. As shown in Fig. 4, the value is a value measured according to the following procedure: setting a distance between supporting points to 30 mm, preparing a test piece having a length of 40 mm, a width of 30 mm, and a thickness of 1.5 mm, and provided with a joining part 12 (joining surface 11) at the center in a length direction, placing the test piece in such a manner that the joining part 12 is located at the center between the supporting points, and measuring the value with applying a load from the upper side of the joining part.

In the ceramic joined article of the present invention, a deterioration of the configuration of the ceramic at the joining surface is low.

EXAMPLES

The present invention will be described in greater detail by examples below, but it should be construed that the invention is in no way limited to such examples.

<Apparatus and measuring method>

For irradiation with a microwave, a microwave sintering furnace (model number: MW-Master) (hereafter also referred to as a "jointing apparatus") manufactured by MINO CERAMIC CO., LTD. was used.

The measurement of a temperature was carried out by using an infrared radiometer thermometer attached to the microwave sintering furnace.

The start of the self-heating of an area in the vicinity of the surface to be joined of the ceramic to be joined (aluminum nitride (AlN) sinter) was judged as described in the following:

(1) A preliminary experiment was carried out by a method similar to that of the experiment described in the following. It was confirmed in advance that the preheating of the ceramic (aluminum nitride) had been already started when a preheating heating element (a sinter made of SiC) has a temperature of at least 1300°C.

(2) It was judged that the preheating of the ceramic (aluminum nitride) had been already started when the preheating heating element had a temperature of 1300°C.

<Flexural test>

A three point flexural test was carried out according to the flexural test method of fine ceramics at room temperature (JIS C2141 specification). The distance between supporting points was set to 30 mm. In evaluating the ceramics (aluminum nitride) after the joining, as shown in Fig. 4, the ceramic joined article was formed to be a sample material piece having a total length of 40 mm and a thickness of 1.5 mm, the test piece was placed in such a manner that the joining part is located at the center between the supporting points, and a load was applied to the joining part.

[Example 1]

<Joining AlN sinters together>

Aluminum nitride sinters of 30 mm x 30 mm and a thickness of 2 mm (SH-15 manufactured by Tokuyama Corporation) were joined together as described in the following.

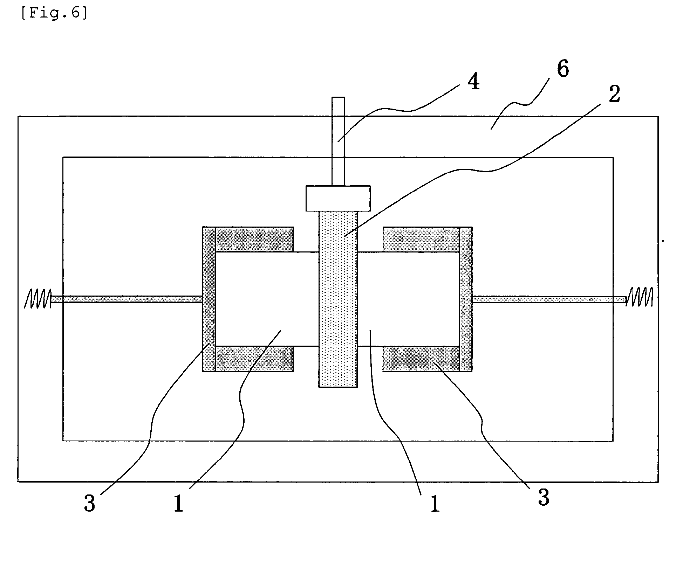

As shown in Figs. 5 and 6, two aluminum nitride (AlN) sinters 1 were placed in such a manner that the aluminum nitride (AlN) sinters 1 come into contact with each other at the center of the chassis of the joining apparatus 6. The surfaces to be joined (surfaces of 30 mm x 2 mm) of the aluminum nitride sinters 1 were flattened in order to prevent gap formation. The aluminum nitride sinters 1 were pressed to each other using a jig 3 to apply a pressure of 1 kgf/cm$^2$ (0.098 MPa) to the surfaces 11 to be joined.

As the preheating means, a pair of sinters 2 made of silicon carbide of 40 mm x 10 mm and a thickness of 2 mm was used. As shown in Fig. 5, the pair of sinters 2 was placed around the surface to be joined of the aluminum nitride sinters 1 in such a manner that the pair of sinters 2 was apart from the aluminum nitride sinters 1 at a distance of 0.5 mm.

The silicon carbide sinters 2 were irradiated with an electromagnetic wave (frequency: 2.45 GHz) from a microwave transmitter 5 to carry out the preheating. The preheating and the main heating were carried out in an atmosphere of nitrogen, and the preheating was started at room temperature. The output of the microwave was increased to 3000 W at a constant rate in 120 minutes.

The self-heating of the silicon carbide sinters 2 was induced by electromagnetic wave irradiation, and a temperature of the surfaces 11 to be joined of the aluminum nitride sinters 1 were increased by this heat. The surface temperature of the preheating heating element (silicon carbide sinter 2) becomes 1300°C 60 minutes after the start of electromagnetic wave irradiation. Consequently, it was judged that the self-heating of the two aluminum nitride sinters 1 facing to each other had been induced at an area in the vicinity of the surfaces to be joined.

Subsequently, the preheating heating element (silicon carbide sinter 2) was removed while electromagnetic wave irradiation was continued. The surface 11 to be joined of the aluminum nitride sinters 1 was further heated for 60 minutes to complete the joining of the two aluminum nitride sinters 1. The temperature of the joining part was 1700°C when the joining was completed.

The electromagnetic wave irradiation was terminated and, then, the aluminum nitride joined article obtained was allowed to cool in the joining apparatus for 60 minutes and was taken out from the apparatus.

A three point flexural test of the joined aluminum nitride sinters (aluminum nitride joined article) was carried out. The strength of the joined aluminum nitride sinters was the same as that of the aluminum nitride sinter before the joining.

## Claims

1. A method of joining ceramics, which method is a method of thermally joining ceramics of the same kind or different kinds by inducing self-heating of the ceramics by electromagnetic wave irradiation, comprising:

   preheating a surface to be joined of the ceramic by a heating means that comprises an auxiliary heating means other than the self-heating.

2. The method of joining ceramics according to claim 1, wherein the preheating is carried out up to a temperature in which the rate of temperature increase of the ceramic due to the self-heating is 1°C per minute or higher in the vicinity of the surface to be joined of the ceramic.

3. The method of joining ceramics according to claim 1 or 2, wherein the preheating is carried out up to a temperature in which the dielectric loss factor ($\varepsilon_r \tan\delta$) of the ceramic is 0.005 or higher under the condition that the measuring frequency is 2.45 GHz in the vicinity of the surface to be joined of the ceramic.

4. The method of joining ceramics according to any one of claims 1 to 3, wherein the auxiliary heating means is a heating element placed around the surface to be joined of the ceramic.

5. The method of joining ceramics according to claim 4, wherein the heating element is a dielectric body made of a substance having a dielectric loss factor at room temperature (25°C) larger than that of the ceramic and self-heating of the dielectric body is induced by absorption of the electromagnetic wave.

6. The method of joining ceramics according to claim 5, wherein the dielectric body is made of a substance having a dielectric loss factor ($\varepsilon_r \tan\delta$) of 0.003 or higher at room temperature (25°C) and a dielectric loss factor ($\varepsilon_r \tan\delta$) of 0.5 or higher at 800°C, under the condition that the measuring frequency is 2.45 GHz.

7. The method of joining ceramics according to claim 4, wherein the heating element is a resistance heating element.

8. The method of joining ceramics according to any one of claims 1 to 3, wherein the auxiliary heating means is a heating furnace.

9. The method of joining ceramics according to any one of claims 1 to 8, wherein the frequency of the electromagnetic wave is in the range of 0.2 to 30 GHz.

10. The method of joining ceramics according to any one of claims 1 to 9, wherein the ceramics each have a dielectric loss factor ($\varepsilon_r\tan\delta$) in the range of 0.0001 to 0.002 at room temperature (25°C) and a dielectric loss factor ($\varepsilon_r\tan\delta$) in the range of 0.003 to 0.3 at 800°C, under the condition that the measuring frequency is 2.45 GHz, and the difference in thermal expansion coefficient between the ceramics is within $3 \times 10^{-6}$ [K$^{-1}$].

11. The method of joining ceramics according to any one of claims 1 to 10, wherein the ceramic is aluminum nitride body.

12. A method of joining aluminum nitride bodies, comprising:

inducing self-heating of a burned substance that is placed around the surface to be joined of the aluminum nitride body and that is made of a compound of at least one of silicon carbide, zirconia, and steatite by electromagnetic wave irradiation thereto and, by this heat, heating a surface to be joined of the aluminum nitride body up to 1000°C or higher;
making the surfaces to be joined come into contact with each other while keeping the temperature; and thereafter heating the surfaces to be joined by electromagnetic wave irradiation, thereby joining the aluminum nitride bodies together.

13. A ceramic joined article formed by joining by the method according to any one of claims 1 to 12.

[Fig.1]

(a)

1    11    1

(b)

1    11    1

(c)

1    11    1

[Fig.2]

(a)

1    11    1

(b)

1

11    11

11

1

1

[Fig.3]

[Fig.4]

[Fig.5]

[Fig.6]

<table>
<tr><td colspan="2" align="center"><strong>INTERNATIONAL SEARCH REPORT</strong></td><td>International application No.<br>PCT/JP2007/056414</td></tr>
</table>

| A. CLASSIFICATION OF SUBJECT MATTER |
|---|
| $C04B37/00$ (2006.01)i |

According to International Patent Classification (IPC) or to both national classification and IPC

| B. FIELDS SEARCHED |
|---|

Minimum documentation searched (classification system followed by classification symbols)
C04B37/00

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 63-11580 A  (Toyota Central Research and Development Laboratories, Inc.),<br>19 January, 1988 (19.01.88),<br>Full text<br>& US 4772770 A          & EP 251256 A1<br>& DE 3761818 A | 13<br>1-12 |
| Y | JP 9-301783 A  (Maruwa Ceramic Co., Ltd.),<br>25 November, 1997 (25.11.97),<br>Claims 1, 2; Par. Nos. [0028], [0029], [0034], [0036]<br>(Family: none) | 1-12 |
| Y | JP 10-233294 A  (Tokyo Electron Ltd.),<br>02 September, 1998 (02.09.98),<br>Par. No. [0019]<br>(Family: none) | 12 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    18 June, 2007 (18.06.07) | Date of mailing of the international search report<br>    26 June, 2007 (26.06.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2007/056414

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-154169 A  (Saint-Gobain TM Kabushiki Kaisha), 16 June, 2005 (16.06.05), Par. No. [0032] (Family: none) | 12 |

Form PCT/ISA/210 (continuation of second sheet) (April 2005)

**EP 2 006 267 A1**

**Patent documents cited in the description**

- JP 2062516 B